# EUROPEAN PATENT APPLICATION

(11) **EP 0 902 205 A2**
(43) Date of publication of application: **17.03.1999**
(21) Application number: 98116454.4
(22) Date of filing: 31.08.1998
(51) Int. Cl.: F16D 9/00

(54) **Power transmission system readily capable of properly setting a preselected torque at which power transmission is to be interrupted**

(30) Priority: 11.09.1997 JP 246820/97
(71) Applicant: SANDEN CORPORATION, Isesaki-shi Gunma-ken (JP)
(72) Inventor: Taguchi, Yukihiko, Isesaki-shi, Gunma 372 (JP)
(74) Representative: Prüfer, Lutz H., Dipl.-Phys.

(57) **Abstract**

In a power transmission system for transmitting a rotation power between a driving member or a pulley (1) and a driven member or a shaft (5) which are rotatable with respect to a common axis, an armature plate (13) has a frictional surface which is in contact with a frictional surface of the pulley with contact pressure caused between said frictional surfaces in a predetermined direction. A supporting member (7, 9, 11) elastically supports the armature plate to the driven member to make the armature be movable in the predetermined direction. A pushing member (15, 17) elastically pushes the armature plate towards the driving member to adjust the contact pressure.

## Description

### Background of the Invention:

This invention relates to a power transmission system and, in particular, to a power transmission system adapted for a clutchless compressor used in an automobile air conditioner.

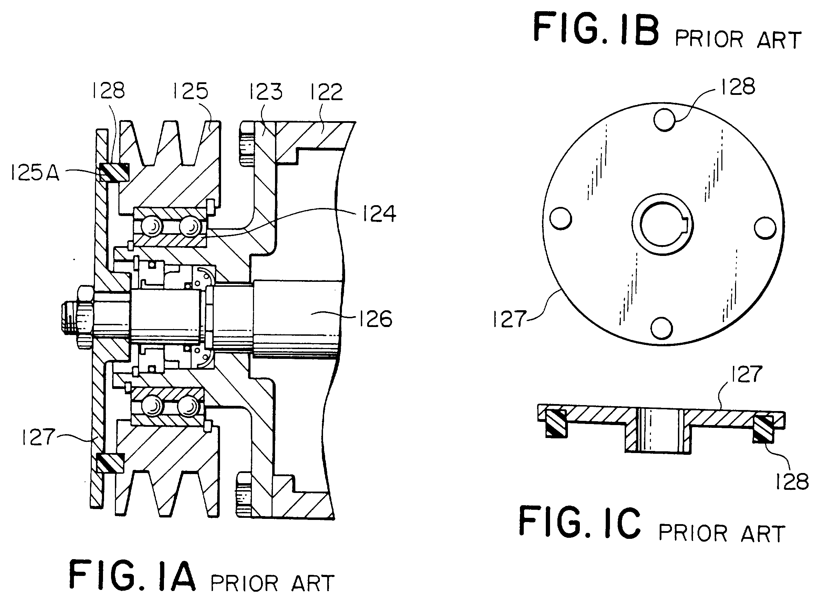

At first referring to Figs. 1A through 1C, description will be made about a conventional power transmission system used in a compressor disclosed in JP-Y 6-39105 (Japanese Utility Model Publication No. 39105/1994).

The compressor comprises a housing 122 having a front nose 123 through which a shaft 126 extends from the interior to the outside of the housing 122. As the power transmission system, a pulley 125 is rotatably coupled to the front nose 123 through a bearing 124 while a rotation transmission plate 127 is fixed to the shaft 126. Four particular members 128 of synthetic resin are fixed to the rotation transmission plate 127 at four separate positions, respectively. Specifically, the particular members 128 have top ends inserted into holes 125A formed in four corresponding positions of the pulley 125. In the following description, the particular members 128 will be called overload fracture members.

For driving the compressor, the pulley 125 is rotated via belts and others which will collectively be called a driving mechanism. It is assumed that the shaft 126 is prevented from rotation thereof upon occurrence of an abnormal condition in the compressor. Immediately that rotation of the shaft 126 is prevented, rotational force between the pulley 126 and the rotation transmission plate 127 rapidly increases. When the rotational force exceeds a preselected torque at which the power transmission is to be interrupted, the overload fracture members 128 will be broken. In this event, power transmission from the pulley 125 to the rotation transmission plate 127 is interrupted.

In the above-mentioned conventional power transmission system, the overload fracture members 128 are broken to interrupt the power transmission when subjected to the overload. With this structure, it is difficult to properly set the preselected torque. In other words, it is difficult to prepare the overload fracture members 128 which will be broken when an actual transmission torque reaches the preselected torque.

In addition, actual occurrence of power interruption may be deviated from the preselected torque due to aging of the overload fracture members 128. Specifically, the overload fracture members 128 may possibly be broken when the actual transmission torque is substantially smaller than the preselected torque. As a result, the power transmission is unexpectedly interrupted so that the compressor becomes idle. Alternatively, the overload fracture members 128 may not be broken even when the actual transmission torque exceeds the preselected torque to undesiredly continue the power transmission. This will result in a serious problem in a running condition of an automobile on which the compressor is mounted.

### Summary of the Invention:

It is therefore an object of this invention to provide a power transmission system which is readily capable of properly setting a preselected torque at which power transmission is to be interrupted in response to overload.

Other objects of the present invention will become clear as the description proceeds.

A power transmission system to which this invention is applicable is for transmitting a rotation power between a driving member and a driven member which are rotatable with respect to a common axis. The driving member has a frictional surface. The power transmission system comprises an armature plate having a frictional surface which is in contact with said frictional surface of the driving member with contact pressure caused between said frictional surfaces in a predetermined direction. The power transmission system further comprises a supporting member elastically supporting said armature plate to said driven member to make said armature be movable in said predetermined direction and a pushing member elastically pushing said armature plate towards said driving member to adjust said contact pressure.

### Brief Description of the Drawing:

Fig. 1A is a sectional view of a conventional power transmission system used in a compressor;
Fig. 1B is a front view of a power transmission plate illustrated in Fig. 1A;
Fig. 1C is a sectional view of the power transmission plate illustrated in Fig. 1B;
Fig. 2 is a sectional view of a compressor including a power transmission system according to an embodiment of this invention in a power transmission state; and
Fig. 3 is a sectional view of the compressor of Fig. 2 but in a power interruption state.

### Description of the Preferred Embodiment:

Now, description will be made about a compressor including a power transmission system according to an embodiment of this invention with reference to the drawing.

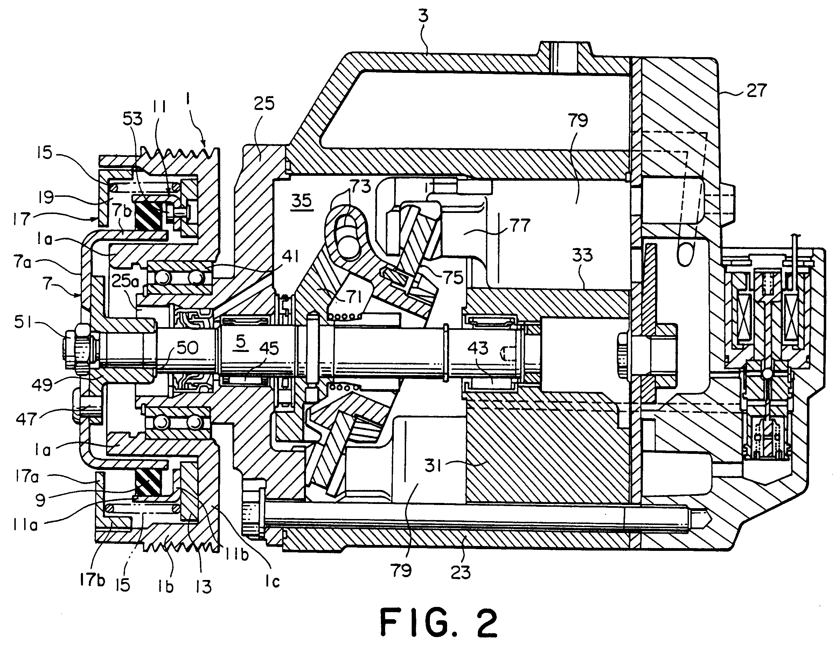

Referring to Fig. 2, the compressor comprises a pulley 1 for rotating in response to driving force from a driving mechanism comprising a belt and others (not shown), a casing of the compressor, and a shaft 5 protruding from the inside to the outside of the casing 3 and having one end and the other end at the outside and the inside of the casing 3, respectively. In the manner known in the art, the pulley 1 and the shaft 5 are rotatable with respect to a common axis extending in a predetermined direction. The pulley 1 is referred to as a driving member. The shaft 5 is referred to as a driven member.

In the compressor, the power transmission system comprises a first power transmission member or an inner ring 7 fixed to the one end of the shaft 5 at the outside of the casing 3, an elastic member or a rubber member 9 of a ring shape fixedly attached to the inner ring 7, and a second power transmission member or an outer ring 11 fixedly attached to the rubber member 9. It is desirable that the rubber member 9 is made of a selected one or a combination of selected ones of synthetic rubber, natural rubber, and vibroisolating rubber. A combination of the inner ring 7, the rubber member 9, and the outer ring 11 is referred to as a supporting member.

The power transmission system further comprises an armature plate 13 fixed to the outer ring 11, a spring member 15 for pressing an armature friction surface of the armature plate 13 against a pulley friction surface of the pulley 1 in the predetermined direction, and a torque setting member 17 for setting a preselected torque by adjusting an urging force of the spring member 15. A combination of the spring member 15 and the setting member 17 is referred to as a pushing member.

In the manner which will presently described, power transmission in the power transmission system is interrupted at the preselected torque. When an actual transmission torque on the friction surfaces exceeds the preselected torque, the armature plate 13 is allowed to slip on the pulley friction surface to prevent the external driving source from being applied with excessive load. In addition, friction heat is generated from slipping of the armature plate 13 on the pulley friction surface to bring about melt-out of the bond of the rubber member 9 and the outer ring 11. Thus, power transmission to the compressor is interrupted.

The rubber member 9, the outer ring 11, the armature plate 13, and the spring member 15 are arranged in a power transmission chamber 19 formed inside the pulley 1. The power transmission chamber 19 has an open end opening in the predetermined direction. The torque setting member 17 is engaged with the pulley 1 to approximately close the open end of the power transmission chamber 19.

The casing 3 comprises a generally cylindrical body 23 opened at one end and the other end, a front end plate 25 closing the one end of the body 23, and a cylinder head 27 closing the other end of the body 23.

The body 23 is provided with a cylinder block 31 integrally formed at the other end. The cylinder block 31 has a plurality of cylinder bores 33 (only one being illustrated in the figure) surrounding the shaft 5. Thus, a crank chamber 35 is formed between the cylinder block 31 within the casing 3 and the front end plate 25 in the predetermined direction.

The front end plate 25 has a cylindrical hollow portion 25a outwardly protruding from its center. The pulley 1 is rotatably supported on an outer surface of the cylindrical hollow portion 25a through a needle bearing 41. The pulley 1 comprises a first cylindrical portion 1a surrounding the hollow portion 25a, a second cylindrical portion 1b surrounding the first cylindrical portion 1a with a predetermined space therefrom, and a connection plate 1c connecting the first and the second cylindrical portions 1a and 1b at the side facing the front end plate 25. Around an outer surface of the second cylindrical portion 1b, a belt is coupled although not illustrated in the figure. The connection plate 1c has an inner surface as the pulley friction surface to be brought into contact with the armature friction surface of the armature plate 13.

The shaft 5 extends through the cylindrical hollow portion 25a of the front end plate 25 into the casing 3. Within the casing 3, the other end of the shaft 5 is rotatably supported by a needle bearing 43 arranged at the center of the cylinder block 31. The middle portion of the shaft 5 is rotatably supported by a needle bearing 45 arranged at the center of the front end plate 25.

The inner ring 7 is fixed by a rivet 47 to a boss 49 fixed to the one end of the shaft 5 by a nut 51. To the outer surface of the inner ring 7, the rubber member 9 is vulcanization-bonded with temporal vulcanization of the rubber in the manner known in the art. Likewise, the outer surface of the rubber member 9 is vulcanization-bonded to the outer ring 11. The outer ring 11 is fixed to the armature plate 13 by a rivet 53.

As mentioned above, the armature plate 13 and the connection plate 1c of the pulley 1 have the armature friction surface and the pulley friction surface kept in frictional contact with each other. The armature friction surface of the armature plate 13 is pressed by the spring member 15 against the pulley friction surface of the connection plate 1c in the predetermined direction. The preselected torque is set by adjusting an urging force of the spring member 15 by means of the torque setting member 17.

The inner ring 7 is of a cup-like shape and has a first inner plate 7a fixed to the shaft 5 by the nut 51 and extending radially with respect to the common axis of the pulley 1 and the shaft 5, and a second inner plate 7b connected to an outer peripheral end of the first inner plate 7a and extending in the predetermined direction. The second inner plate 7b surrounds the first cylindrical portion 1a of the pulley 1 with its top end faced to the outer ring 11.

The outer ring 11 comprises a first outer plate 11a extending in the predetermined direction, and a second outer plate 11b fixed to the armature plate 13 by the rivet 53. The rubber member 9 is interposed between the second inner plate 7b of the inner ring 7 and the first outer plate 11a of the outer ring 11 to fix these plates to each other.

The preselected torque has a value which is greater than a torque range under a compressor load during a normal operation and which can avoid slipping of the belt coupled to the pulley 1. When the urging force of the spring member 15 does not act on the armature plate 13, the armature friction surface and the pulley friction surface have a clearance therebetween. The clearance can be set by selecting the thickness of a shim 50 which is interposed between the boss 49 and a shoulder of the shaft 5 in the predetermined direction.

The torque setting member 17 comprises a first setting plate 17a radially extending at the open end of the power transmission chamber 19, and a second setting plate 17b having a threaded outer surface to be screwed into a threaded inner surface of the second cylindrical portion 1b of the pulley 1. That is, the torque setting member 17 is assembled to the pulley 1 by a screw connection known in the art. By screwing, the torque setting member 17 can be moved to a desired position along the common axis. Thus, the torque setting member 17 serves as an adjusting screw for adjusting the urging force of the spring member 15 interposed between the first setting plate 17a and the armature plate 13.

In the crank chamber 35, a rotor 71 is attached to the shaft 5. The rotor 71 is connected to a swash plate 75 through a hinge mechanism 73. The swash plate 75 can be changed in its inclination angle with respect to the shaft 5. Since the compressor itself is well known in the art, the structure and the operation of the compressor will not be described in detail.

The description will be directed to the operation of the power transmission system. If the compressor does not have any abnormal condition such as a breakage, the actual transmission torque under the compressor load is smaller than the preselected torque. Therefore, no slipping occurs between the armature friction surface and the pulley friction surface. In this state, the driving force is transmitted to the shaft 5 so that the compressor is normally operated. In other words, the power transmission system is in a power transmission state as shown in Fig. 2. In the power transmission state, vibration of the compressor is attenuated by the rubber member 9 before the driving force is transmitted to the pulley 1. This is because the driving force is transmitted to the shaft 5 via the rubber member 9. It is therefore possible to suppress the influence of the vibration and the noise upon the automobile.

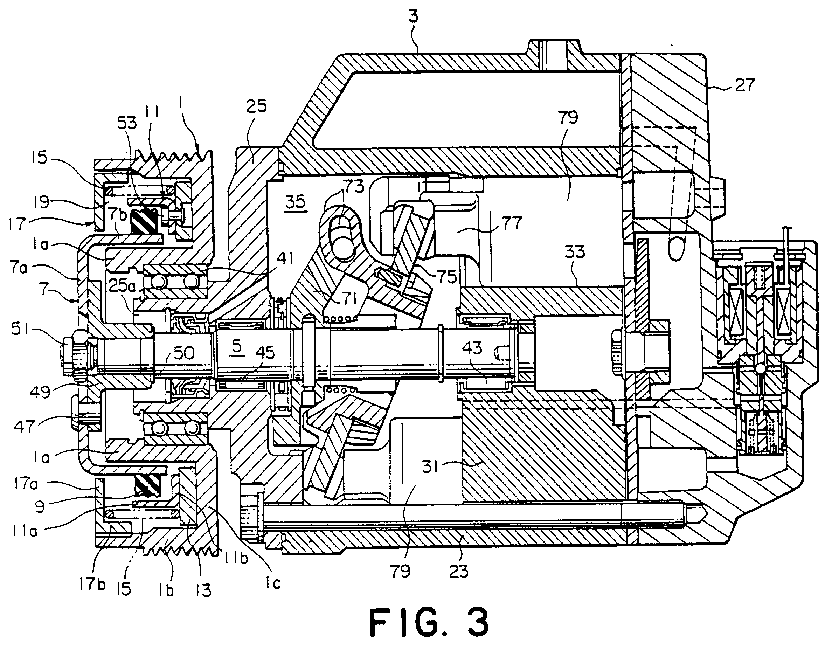

On the other hand, if the compressor has any trouble such as a breakage, the actual transmission torque under the compressor load exceeds the preselected torque. In this event, slipping occurs between the armature friction surface and the pulley friction surface to generate friction heat. As a consequence, the armature plate 13 and the outer ring 11 coupled thereto are drastically increased in temperature. If the temperature exceeds the melting point of the rubber member 9, the bond of the outer ring 11 and the rubber member 9 is melted off. Thus, power transmission to the shaft 5 is interrupted. In other words, the power transmission system is in a power interruption state as shown in Fig. 3. Therefore, the driving mechanism is protected from being seriously damaged.

After the power transmission is interrupted, the armature plate 13 and the outer ring 11 are held by the spring member 15 in press contact with the pulley friction surface and is therefore prevented from being released.

As described above, the preselected torque can be easily set by adjusting the urging force of the spring member 15. It is possible to finely and properly adjust the interruption torque on assembling the compressor. Since the power transmission to the shaft 5 is carried out via the rubber member 9, the vibration transmitted from the shaft 5 to the pulley 1 is effectively attenuated by the rubber member 9. It is therefore possible to suppress the influence of the vibration and the noise of the compressor. Since the power transmission chamber 19 is covered by the pulley 1 and the torque setting member 17, an atmospheric temperature within the power transmission chamber 19 is quickly increased by the friction heat generated from slipping of the armature plate 13. This effectively reduces a time required until the power interruption takes place. In addition, any damaged component and abrasion dust are prevented from being scattered from the power transmission chamber 19 to the outside. In addition, the power transmission system can be reduced in size because the power transmission chamber 19 is arranged inside the pulley.

## Claims

1. A power transmission system for transmitting a rotation power between a driving member and a driven member which are rotatable with respect to a common axis, said driving member having a frictional surface, said power transmission system comprising:
an armature plate having a frictional surface which is in contact with said frictional surface of the driving member with contact pressure caused between said frictional surfaces in a predetermined direction;
a supporting member elastically supporting said armature plate to said driven member to make said armature be movable in said predetermined direction; and a pushing member elastically pushing said armature plate towards said driving member to adjust said contact pressure.

2. A power transmission system as claimed in claim 1, wherein said supporting member comprises an elastic member between said driven member and said armature plate, said elastic member making said armature be movable in said predetermined direction.

3. A power transmission system as claimed in claim 2, wherein said supporting member further comprises:
a first power transmission member connected between said driven member and said elastic member; and
a second power transmission member connected between said armature plate and said elastic member.

4. A power transmission system as claimed in claim 3, wherein said elastic member is made of rubber and vulcanization-bonded to at least one of said first and said second power transmission member by vulcanization of said rubber.

5. A power transmission system as claimed in claim 3 or 4, wherein said first power transmission member has an inner cylindrical portion extending around said common axis, said second power transmission member having an outer cylindrical portion extending around said inner cylindrical portion, said elastic member being interposed between said inner and said outer cylindrical portions.

6. A power transmission system as claimed in one of claims 2 to 5, wherein said elastic member extending around said common axis to form a ring shape.

7. A power transmission system as claimed in claim 5 or 6, wherein said driving member defining a power transmission chamber which contains therein said armature plate, said inner and said outer cylindrical portions, and said elastic member.

8. A power transmission system as claimed in claim 7, wherein said power transmission chamber has an open end opening in said predetermined direction, said pushing member comprising a torque setting member placed at said opening to approximately close said open end.

9. A power transmission system as claimed in one of claims 1 to 8, wherein said pushing member comprises:
a torque setting member connected to said driving member; and
a spring member connected between said torque setting member and said armature plate for urging said armature plate towards said frictional surface of the armature plate.

10. A power transmission system as claimed in claim 9, wherein said torque setting member being assembled to said driving member by a screw connection to have a position adjustable in said predetermined direction.
